# EUROPÄISCHE PATENTSCHRIFT

(11) **EP 2 776 271 B1**
(45) Veröffentlichungstag und Bekanntmachung des Hinweises auf die Patenterteilung: **01.03.2017**
(21) Anmeldenummer: 12775226.9
(22) Anmeldetag: 15.10.2012
(51) Int. Cl.: B60L 7/26, B60T 13/58, F16D 63/00

(54) **VERFAHREN ZUR STEUERUNG EINER DURCH EINE BETRIEBSBREMSE UND EINE ELEKTRISCHE GENERATORBREMSE GEBILDETEN BREMSEINRICHTUNG EINES FAHRZEUGS**
METHOD FOR CONTROLLING A BRAKING DEVICE OF A VEHICLE FORMED BY A SERVICE BRAKE AND AN ELECTRIC GENERATOR BRAKE
PROCÉDÉ DE COMMANDE D'UN SYSTÈME DE FREINAGE DE VÉHICULE CONSTITUÉ D'UN FREIN DE SERVICE ET D'UN FREIN ÉLECTRIQUE

(30) Priorität: 08.11.2011 DE 102011085901
(43) Veröffentlichungstag der Anmeldung: 17.09.2014
(73) Patentinhaber: Bayerische Motoren Werke Aktiengesellschaft, 80809 München (DE)
(72) Erfinder: EBERL, Thomas, 82054 Sauerlach (DE); STROPH, Ralf, 85386 Eching (DE)
(86) Internationale Anmeldenummer: PCT/EP2012/070355
(87) Internationale Veröffentlichungsnummer: WO 2013/068200

(56) Entgegenhaltungen:
- EP-A1- 2 314 486
- DE-A1- 19 604 134
- DE-A1-102010 027 348
- US-A1- 2006 069 488

## Beschreibung

Die vorliegende Erfindung betrifft ein Verfahren zur Steuerung von einer durch eine Betriebsbremse und eine elektrische Generatorbremse gebildeten Bremseinrichtung eines Fahrzeugs gemäß den Merkmalen des Patentanspruches 1.

Ein derartiges Verfahren ist aus der DE 10 2010 027 348 A1 bekannt.

Bei modernen Fahrzeugen ist man bestrebt, während Schub- bzw. Bremsphasen möglichst viel der kinetischen Energie des Fahrzeugs generatorisch zu rekuperieren und in elektrische Energie umzuwandeln, welche dann in einer Batterie oder in einer Kondensatoranordnung gespeichert wird.

Bei dem von der BMW AG vorgestellten Elektrofahrzeug mit der Bezeichnung "Mini E" steuert der Fahrer, ähnlich wie bei einem herkömmlichen Fahrzeug mit Verbrennungsmotor, über ein "Gaspedal" die elektrische Antriebsmaschine. Durch "Gaszurücknehmen", d. h. durch Entlasten des Gas- bzw.

Fahrpedals wird die elektrische Antriebsmaschine in den generatorischen Betrieb geschaltet, wodurch das Fahrzeug abbremst. Je stärker das Gas- bzw. Fahrpedal entlastet wird, umso stärker ist die generatorische Bremswirkung. Die über das Gas- bzw. Fahrpedal einsteuerbare generatorische Bremswirkung ist für die meisten Bremsvorgänge, die im Fahrbetrieb auftreten, ausreichend. Nur in Situationen, in denen das Fahrzeug sehr stark abgebremst werden soll, muss der Fahrer das Bremspedal, über das die herkömmliche Betriebsbremse des Fahrzeugs angesteuert wird, betätigen.

Von Fahrern des Mini E wurde es als sehr angenehmen und komfortable) empfunden, diverse Bremssituationen, bei denen bei herkömmlichen Fahrzeugen aktiv durch Betätigen des Bremspedals gebremst werden muss, allein durch Entlasten des "Gaspedals" bewältigen zu können.

Aufgabe der Erfindung ist es, ein Verfahren zur Steuerung einer durch eine Betriebsbremse und eine elektrische Generatorbremse gebildeten Bremseinrichtung eines Fahrzeugs zu schaffen, das ein "Ein-Pedal-Fahren" auch in Fahrzeugen ermöglicht, deren maximale generatorische Verzögerung in vielen Fahrsituationen hierfür nicht ausreichen würde.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zur Steuerung von einer durch eine Betriebsbremse und eine elektrische Generatorbremse gebildeten Bremseinrichtung eines Fahrzeugs, bei dem über ein "erstes Betätigungsorgan" eine Bremsanforderung bis zu einer vorgegebenen maximalen Bremsanforderung vorgebbar ist. Unter dem Begriff "Betriebsbremse" wird z. B. eine hydraulische, elektrohydraulische oder pneumatische Bremsanlage verstanden, wie sie aus dem Pkw- bzw. Lkw-Bereich bekannt ist. Das "erste Betätigungsorgan", über das der Fahrer eine Bremsanforderung vorgeben kann, kann z. B. durch ein Fußpedal gebildet sein. Das erste Betätigungsorgan kann insbesondere durch ein Fußpedal gebildet sein, über das durch eine Druckbetätigung desselben ein Antrieb(smotor) des Fahrzeugs beschleunigbar und durch dessen Entlastung die elektrische Generatorbremse ansteuerbar ist.

Der "Antrieb" des Fahrzeugs kann beispielsweise durch einen Verbrennungsmotor (herkömmliches Fahrzeug) und/oder durch eine elektrische Antriebsmaschine (Hybridfahrzeug bzw. reines Elektrofahrzeug) gebildet sein.

Der Kern der Erfindung besteht darin, dass das Fahrzeug bei einer über das erste Betätigungsorgan eingesteuerten Bremsanforderung
a) ausschließlich mit der elektrischen Generatorbremse gebremst wird, wenn diese allein die vom Fahrer vorgegebene Bremsanforderung erfüllen kann, oder
b) mit der maximal möglichen Bremsleistung der elektrischen Generatorbremse und zusätzlich mit einer von der Betriebsbremse geleisteten Bremsleistung gebremst wird, wenn die vom Fahrer vorgegebene Bremsanforderung größer ist als die maximal von der elektrischen Generatorbremse erbringbare Bremsleistung und kleiner ist als die "vorgegebene maximale Bremsanforderung".

Gemäß der Erfindung wird das "Ein-Pedal-Bremsen" somit in einen Bremsleistungsbereich hinein erweitert, der über die maximal mögliche Bremsleistung, welche mit der elektrischen Generatorbremse erbringbar ist, hinausgeht.

Die "vorgegebene maximale Bremsanforderung", die mit einer Ein-Pedal-Bremsung darstellbar ist, kann z. B. als Kennlinie über der Fahrzeuggeschwindigkeit vorgegeben sein. Der Verlauf der Kennlinie ist im Prinzip frei wählbar unter der Randbedingung, dass die "vorgegebene maximale Bremsanforderung" von der Bremseinrichtung des Fahrzeugs, d. h. von der Betriebsbremse und der Generatorbremse zusammengenommen darstellbar sein muss. Die vorgegebene maximale Bremsanforderung kann beispielsweise so definiert sein, dass sie statistisch betrachtet x% aller im Fahrbetrieb auftretenden Bremssituationen abdeckt. Anders ausgedrückt, kann die über das erste Betätigungsorgan maximal vorgebbare Bremsanforderung definiert sein als diejenige Bremsanforderung, welche, statistisch betrachtet, für z. B. 80%, 85%, 90% o.ä. aller im Fahrbetrieb auftretenden Bremssituationen eine hinreichende Bremsleistung ermöglicht.

Nur in den vergleichsweise seltenen Fahrsituationen, in denen der Fahrer eine Bremsanforderung vorgibt (z. B. "Vollbremsung"), welche größer als die vorgegebene maximale Bremsanforderung ist, muss das Fahrzeug durch Betätigen eines zweiten Betätigungsorgans gebremst werden. Das zweite Betätigungsorgan kann z. B. durch das bei herkömmlichen Fahrzeugen vorgesehene "Bremspedal" gebildet sein. Das zweite Betätigungsorgan im Sinne der vorliegenden Erfindung hat im Unterschied zu dem ersten Betätigungsorgan ausschließlich die Funktion eines Bremssteuerorgans (zur Ansteuerung der Betriebsbremse und der generatorischen Bremse, sofern der Ladezustand des elektrischen Energiespeichers gerade ein generatorisches Bremsen ermöglicht), wohingegen das erste Betätigungsorgan durch ein "Gaspedal" gebildet sein kann.

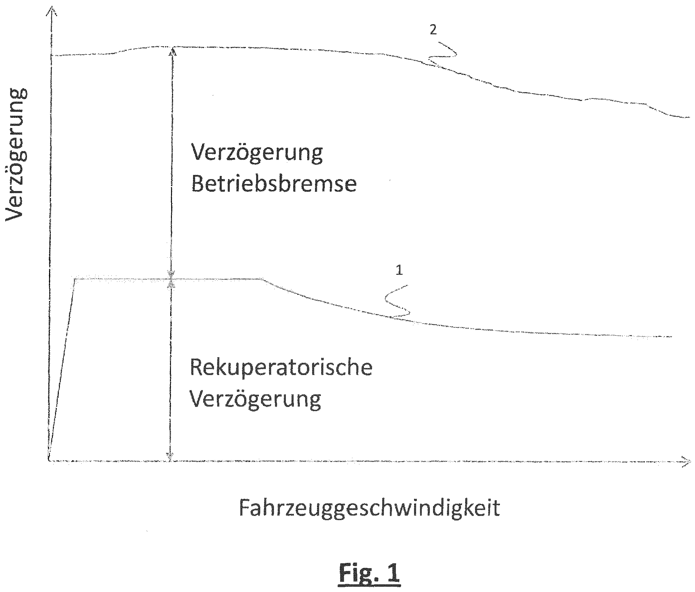

Im Folgenden wird die Erfindung im Zusammenhang mit der Zeichnung näher erläutert. Die einzige Figur 1 erläutert das Grundprinzip der Erfindung anhand eines Diagramms.

Auf der Abszisse des in Figur 1 gezeigten Diagramms ist die Fahrzeuggeschwindigkeit aufgetragen, auf der Ordinate die Fahrzeugverzögerung. Die mit dem Bezugszeichen 1 bezeichnete Kurve stellt die maximale Fahrzeugverzögerung dar, die allein durch Betätigen der elektrischen Generatorbremse erreichbar ist. Liegt die vom Fahrer vorgegebene Bremsanforderung unterhalb der Kurve 1, so kann das Fahrzeug ausschließlich generatorisch gebremst werden.

Liegt die vom Fahrer vorgegebene Bremsanforderung hingegen oberhalb der Kurve 1, so wird zusätzlich die Betriebsbremse benötigt. Die Kurve 2 beschreibt die mit einer "Ein-Pedal-Bremsung" maximal erreichbare Fahrzeugverzögerung. Die Kurve 2 kann im Prinzip beliebig vorgegeben werden. Beispielsweise kann die Kurve 2 so definiert sein, dass sie z. B. 80% oder 90% aller im normalen Fahrbetrieb auftretenden Bremssituationen abdeckt. Liegt die vom Fahrer vorgegebene Bremsanforderung in einem Bereich zwischen der Kurve 1 und der Kurve 2, so wird mit der maximal möglichen Bremsleistung der elektrischen Generatorbremse gebremst und zusätzlich von einer Bremsregelelektronik die Betriebsbremse bedarfsgerecht zugesteuert, so dass gerade die vom Fahrer gewünschte Bremsleistung erreicht wird.

Liegt die vom Fahrer vorgegebene Bremsanforderung oberhalb der Kurve 2, d. h. möchte der Fahrer sehr stark bremsen, so ist dies gemäß der vorliegenden Erfindung nicht mehr durch eine Ein-Pedal-Bremsung möglich. Möchte der Fahrer sehr stark bremsen, so muss er, wie bei herkömmlichen Fahrzeugen ein zweites Betätigungsorgan (z. B. Bremspedal) betätigen.

## Patentansprüche

1. Verfahren zur Steuerung einer durch eine Betriebsbremse und eine elektrische Generatorbremse gebildeten Bremseinrichtung eines Fahrzeugs, bei dem über ein erstes Betätigungsorgän eine Bremsanforderung bis zu einer vorgegebenen maximalen Bremsleistung (2) vorgebbar ist, wobei bei einer über das erste Betätigungsorgan eingesteuerten Bremsanforderung das Fahrzeug
- ausschließlich mit der elektrischen Generatorbremse gebremst wird, wenn diese allein die Bremsanforderung erfüllen kann, oder
- mit der maximal möglichen Bremsleistung (1) der elektrischen Generatorbremse und zusätzlich mit einer von der Betriebsbremse geleisteten Bremsleistung gebremst wird, wenn die Bremsanforderung
- größer ist als die maximal von der elektrischen Generatorbremse erbringbare Bremsleistung (1) und
- kleiner ist als die vorgegebene maximale Bremsleistung,
**dadurch gekennzeichnet, dass**
• die vorgegebene maximale Bremsleistung (2), die über das erste Betätigungsorgan vorgebbar ist, kleiner ist als eine von der Bremseinrichtung des Fahrzeugs erbringbare Maximalbremsleistung und
• eine angeforderte Bremsleistung, welche größer als die vorgegebene maximale Bremsleistung (2) ist, durch Betätigen eines zweiten Betätigungsorgans vorzugeben ist, welches ausschließlich die Funktion eines Bremssteuerorgans hat.

2. Verfahren nach Anspruch 1, **dadurch gekennzeichnet, dass** das erste Betätigungsorgan ein per Fuß betätigbares Pedal ist, durch dessen Betätigung ein Antriebsmotor des Fahrzeugs und, in einem Schubbetrieb des Fahrzeugs, die elektrische Generatorbremse und die Betriebsbremse ansteuerbar ist.

3. Verfahren nach Anspruch 1 oder 2, **dadurch gekennzeichnet, dass** die über das erste Betätigungsorgan anforderbare, vorgegebene maximale Bremsanforderung (1) durch eine vorgegebene, von der Fahrzeuggeschwindigkeit abhängige Kennlinie beschrieben ist.

4. Verfahren nach Anspruch 3, **dadurch gekennzeichnet, dass** die über das erste Betätigungsorgan anforderbare, vorgegebene maximale Bremsleistung definiert ist als diejenige Bremsleistung, welche statistisch betrachtet für x% aller auftretenden Bremssituationen hinreichend ist.

## Claims

1. A method for controlling a braking device of a vehicle, which is formed by a service brake and by an electric generator brake, in which method a braking requirement up to a preset maximum braking power (2) can be preset via a first actuating member, wherein for a braking requirement which is initiated via the first actuating member, the vehicle
- is braked only by the electric generator brake, if it can satisfy the braking requirement on its own, or
- is braked by the maximally possible braking power (1) of the electric generator brake and also by a braking power provided by the service brake, if the braking requirement
- is greater than the braking power (1) which can be maximally provided by the electric generator brake and
- is less than the preset maximum braking power,
**characterised in that**
• the preset maximum braking power (2) which can be preset via the first actuating member, is less than a maximum braking power which can be provided by the braking device of the vehicle, and
• a required braking power which is greater than the preset maximum braking power (2) is to be preset by actuating a second actuating member which exclusively has the function of a brake control member.

2. A method according to claim 1, **characterised in that** the first actuating member is a pedal actuatable by foot, the actuation of which can activate a drive motor of the vehicle and, in overrun of the vehicle, the electric generator brake and the service brake.

3. A method according to claim 1 or claim 2, **characterised in that** the preset maximum braking requirement (1) which can be demanded via the first actuating member is described by a preset characteristic curve which is subject to the speed of the vehicle.

4. A method according to claim 3, **characterised in that** the preset maximum braking power which can be demanded via the first actuating member is defined as the braking power which, considered statistically, is adequate for x % of all braking situations which occur.

## Revendications

1. Procédé de commande d'un dispositif de freinage d'un véhicule formé par un frein de service et par un frein moteur électrique, selon lequel, un premier organe d'actionnement permet de prédéfinir une demande de freinage jusqu'à une puissance de freinage maximum prédéfinie (2), et, en présence d'une demande de freinage commandée par le premier organe d'actionnement, le véhicule :
- est exclusivement freiné avec le frein moteur électrique lorsque celui-ci peut à lui seul satisfaire à la demande de freinage, ou,
- est freiné avec la puissance de freinage maximum possible (1) du frein moteur électrique et en outre avec une puissance de freinage fournie par le frein de service lorsque la demande de freinage :
- est supérieure à la puissance de freinage maximum (1) pouvant être appliquée par le frein moteur électrique, et
- est inférieure à la puissance de freinage maximum prédéfinie,
**caractérisé en ce que**
• la puissance de freinage maximum prédéfinie (2) pouvant être prédéfinie par le premier organe de freinage est inférieure à la puissance de freinage maximum pouvant être appliquée par le dispositif de freinage du véhicule, et
• une puissance de freinage demandée qui est supérieure à la puissance de freinage maximum prédéfinie (2) peut être prédéfinie par actionnement d'un second organe d'actionnement qui a exclusivement la fonction d'organe de commande de frein.

2. Procédé conforme à la revendication 1,
**caractérisé en ce que**
le premier organe d'actionnement est une pédale actionnable au pied dont l'actionnement permet de commander le moteur d'entraînement du véhicule et, lors d'un fonctionnement en poussée du véhicule le frein moteur électrique et le frein de service.

3. Procédé conforme à la revendication 1 ou 2,
**caractérisé en ce que**
la demande de freinage maximum prédéfinie (1) pouvant être fournie par le premier organe d'actionnement est décrite par une caractéristique prédéfinie dépendant de la vitesse du véhicule.

4. Procédé conforme à la revendication 3,
**caractérisé en ce que**
la puissance de freinage maximum prédéfinie pouvant être fournie par le premier organe d'actionnement est définie comme étant la puissance de freinage qui, d'un point de vue statistique est suffisante pour x% de toutes les situations de freinage se présentant.
